Europäisches Patentamt

European Patent Office

Office européen des brevets

(11) Veröffentlichungsnummer: **0 104 636**
A2

# (12) EUROPÄISCHE PATENTANMELDUNG

(21) Anmeldenummer: 83109569.0

(22) Anmeldetag: 26.09.83

(51) Int. Cl.³: **G 01 N 27/56**
G 01 N 27/30, G 01 N 27/42
C 25 B 11/00

(30) Priorität: 28.09.82 JP 169275/82

(43) Veröffentlichungstag der Anmeldung:
04.04.84 Patentblatt 84/14

(84) Benannte Vertragsstaaten:
BE DE FR GB IT

(71) Anmelder: FUJI ELECTRIC CORPORATE RESEARCH
AND DEVELOPMENT LTD.
2-1, Nagasaka 2-chome
Yokosuka-shi Kanagawa-ken(JP)

(72) Erfinder: Shiraishi, Hideo
Higiriyama-1-63-1 Kounan-ku
Yokohama-shi Kanagawa-ken(JP)

(74) Vertreter: Mehl, Ernst, Dipl.-Ing. et al,
Postfach 22 01 76
D-8000 München 22(DE)

(54) Sauerstoffsensor und Verfahren zu dessen Herstellung.

(57) Auf einem Keramiksubstrat werden nacheinander mittels Bedampfungs-, Zerstäubungs- oder Sprühverfahren eine Kohleschicht, eine Platinschicht, eine Zirkonoxydschicht und eine weitere Platinschicht aufgebracht. Durch Ausbrennen der Kohleschicht entsteht ein Hohlraum zur Aufnahme einer Gasprobe bestimmten Volumens, deren Sauerstoffgehalt durch Coulomb-Titration durch die Zirkonoxydschicht bei an die Platinschichten als Elektroden angelegtem konstantem Potential bestimmt wird.

Derartige Sauerstoffsensoren eignen sich aufgrund der Beschichtungs- und Ausbrenntechnik zur Massenherstellung in Chip-Form.

FIG 2

EP 0 104 636 A2

Fuji Electric Corporate Research
and Development Co., Ltd.
Yokosuka-shi, Kanagawa-ken
Japan

Unser Zeichen

VPA 82 P 8574 E

0104636

## Sauerstoffsensor und Verfahren zu dessen Herstellung

Die Erfindung betrifft einen Sauerstoffsensor gemäß dem Oberbegriff des Anspruchs 1 und ein Verfahren zu seiner Herstellung.

Sauerstoffsensoren dieser Art sind bekannt, beispielsweise aus der US-A 3 907 657.

In einer Kammer bestimmten Volumens, deren Wand z. T. aus einem Sauerstoffionen leitenden Festelektrolyten, beispielsweise einem bestimmten Metalloxyd, besteht, befindet sich eine Gasprobe, deren Sauerstoffkomponente bestimmt werden soll.

Der Festelektrolyt ist innen und außen mit porösen Edelmetallelektroden versehen, an die eine Stromquelle angeschlossen ist. Beim Einschalten des Stroms wird der in dem Kammervolumen befindliche Sauerstoff durch die ionenleitfähige Wand abgesaugt, die dazu benötigte elektrische Ladungsmenge ist ein Maß für die Sauerstoffkonzentration in der Gasprobe.

Nach einer bestimmten Füllzeit, während der über eine Öffnung hohen Strömungswiderstands wieder sauerstoffhaltiges Gas aus der zu überwachenden Gasatmosphäre in die Kammer eindiffundiert, bis ein Gleichgewicht der Sauerstoffpartialdrücke herrscht, kann die Messung wiederholt werden.

Da derartige, relativ einfach aufgebaute Sauerstoffsensoren ein breites Anwendungsgebiet haben, z. B. in Einrichtungen zur Überwachung oder Optimierung des Brennstoff-Luft-Verhältnisses bei Verbrennungsprozessen, insbesondere in Motoren, oder in Grenzwertmeldern zur Signalisierung von Sauerstoffmangel in geschlossenen Räumen, besteht ein Bedarf an preisgünstigen, kompakten Ausführungen.

Sp 4 Scl / 21.09.1983

Es ist somit Aufgabe der Erfindung, eine für wirtschaftliche Massenfertigung geeignete Form solcher Sensoren und ein entsprechendes Herstellungsverfahren anzugeben.

Eine Lösung dieser Aufgabe wird mit den Lehren der Ansprüche 1 und 5 gegeben.

Anstelle des arbeitsaufwendigen Aufbaus einer herkömmlichen Sensorkammer aus einzelnen Teilen tritt die Anwendung von die Werkstoffe in feinverteilter Form aufbringenden Verfahren, wie Siebdruck-, Zerstäubungs-(Sputter)-, Bedampfungs- oder Plasma-Sprüh-Technik, die es erlauben, die wesentlichen Wandteile der Kammer und die Elektroden als Schichten in beliebiger Dicke in aufeinanderfolgenden, automatisierten Arbeitsgängen übereinander anzulegen. Insbesondere der Festelektrolyt kann in einer Schichtdicke von einigen Hundert /u aufgebracht werden, so daß die Sensoren aufgrund des entsprechend geringen elektrischen Widerstands bei relativ niedrigen Temperaturen betrieben werden können.

Der zur Aufnahme der Gasprobe bestimmten Volumens benötigte Hohlraum in dem Sensor läßt sich durch Ausbrennen der vorzugsweise aus Kohle bestehenden, entflammbaren Feststoffschicht auf einfachste Weise herstellen.

Der wesentliche Vorteil dieses Fertigungsverfahrens ist jedoch darin zu sehen, daß auf einem gemeinsamen großflächigen Substrat eine Vielzahl von solchen Sensoren zugleich hergestellt werden können, die dann durch Ritzen und Abbrechen nach Art der aus der Halbleitertechnik bekannten Chips in Einzelelemente aufgeteilt werden.

Zur Erläuterung der Erfindung ist in den Figuren 1 bis 3 ein Ausführungsbeispiel eines Sensors schematisch dargestellt und sein Aufbau und Herstellungsverfahren im folgenden beschrieben.

Es zeigen

Figur 1 den chipförmigen Sensor in einer Ansicht von oben,

Figur 2 in einem Querschnitt den Aufbau der verschiedenen Schichten,

Figur 3 einen Querschnitt durch den betriebsfertigen Sensor.


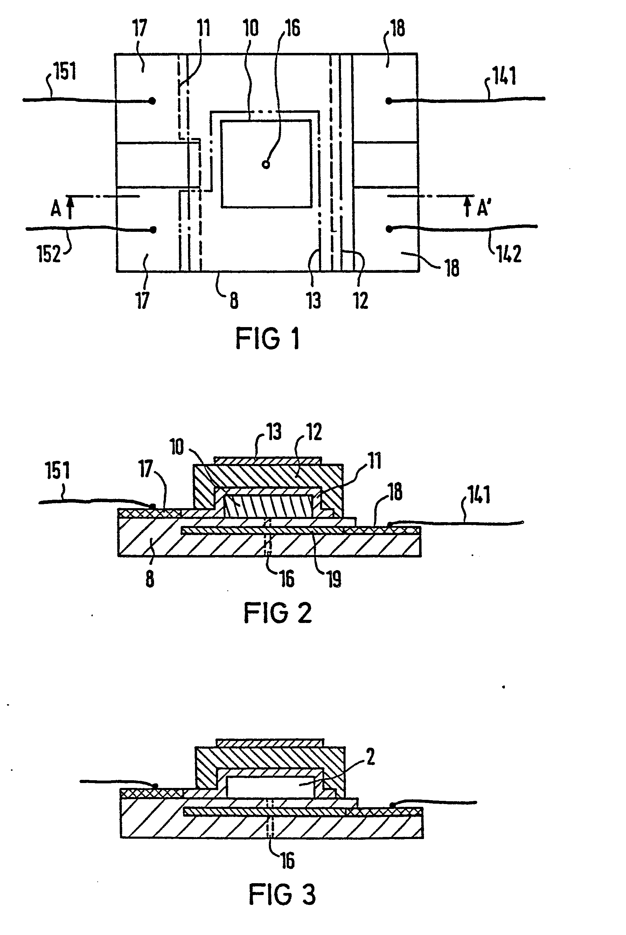

Wie Figur 1 und der Querschnitt längs der Linie A - A´ in Figur 2 zeigen, ist die Grundplatte des Sauerstoffsensors ein rechteckiges flaches Keramiksubstrat 8, vorzugsweise aus Aluminiumoxyd.

Mittels Siebdruck ist auf der Oberfläche des Substrats 8 eine Feststoffschicht 10 aus Kohle aufgebracht, deren Form und Abmessungen, wie später näher erläutert, einem bestimmten Volumen entsprechen.

In einem anschließenden Trocknungsprozeß bei 200.°C wird durch Polymerisation des Bindemittels der Siebdruckpaste die Schicht 10 getrocknet und verfestigt.

Auf die Kohleschicht 10, sie allseitig umgebend, wird mittels Zerstäuben (Sputtern) eine Edelmetallschicht 11 aus Platin als Innenelektrode aufgebracht, deren Umrißform in Figur 1 durch die gestrichelte Linie angedeutet ist.

Mit einem Plasma-Sprüh-Verfahren wird dann die folgende Festelektrolytschicht 12 mit einer Dicke von etwa 200 /u aufgebracht, als Festelektrolyt wird vorzugsweise stabilisiertes Zirkonoxyd verwendet. Die Umrißlinie dieser Schicht 12 ist in Figur 1 mit strichpunktierten Linien angedeutet.


Als letzte Schicht folgt wieder eine Edelmetallschicht 13 als Außenelektrode, die durch Sputtern hergestellt wird und deren Umriß in Figur 1 mit der Strich-Doppelpunkt-Linie angegeben ist.

Die bis auf die Substratebene reichenden Fortsätze der Edelmetallschichten 11 und 13 werden mit Edelmetallanschlußflächen 17 verbunden, auf welchen die Anschlußleitungen 151 für die Innenelektrode und 152 für die Außenelektrode aufgebondet sind.

In dem Substrat 8 kann ein Heizelement 19 angeordnet sein, welches über Anschlußflächen 18 und darauf befestigte Anschlußleitungen 141, 142 an eine Stromquelle anschließbar ist. Mit Hilfe dieses Heizelements und einer Konstantspannungsquelle wird der Sensor auf einer der Sättigungstemperatur entsprechenden Temperatur gehalten.

Das so entstandene Gebilde wird einer Temperatur ausgesetzt, bei der die Kohleschicht 10 verbrennt und dabei in die flüchtige Phase übergeht. Dies geschieht in einem Tunnelofen bei 600 $^{\circ}$C.

In dem Substrat 8 ist eine durch die Dicke des Substrats führende gasleitende Verbindung 16 hohen Strömungswiderstands, hier eine Öffnung von etwa 50 $\mu$ Durchmesser, angebracht, durch welche die Verbrennungsgase abziehen können, so daß, wie in <u>Figur 3</u> aus dem Querschnitt eines fertiggestellten Sensors zu erkennen ist, ein Hohlraum 2 bestimmten Volumens entsteht.

Die gasleitende Verbindung 16 dient zugleich zum Anschluß des Sensors an eine Gasatmosphäre, aus der eine Probe, deren Volumen von dem Hohlraum 2 bestimmt ist, entnommen werden soll. Das Probengas diffundiert durch die Öffnung, bis gleiche Sauerstoffpartialdrücke innen und außen herrschen.

Somit kann durch den geschichteten Aufbau der Meßkammer und durch Ausbrennen der Kohleschicht die Herstellung der Sauerstoffsensoren, insbesondere die Ausbildung des Hohlraums bestimmten Volumens, stark vereinfacht werden.

11 Patentansprüche
3 Figuren

<u>Patentansprüche</u>

1. Sauerstoffsensor mit

a) einer einen Hohlraum bestimmten Volumens umschließenden Meßkammer,

b) einem einen Teil der Kammerwand bildenden, Sauerstoffionen leitenden Festelektrolyten,

c) je einer innen und außen auf diesen Teil der Kammerwand aufgebrachten Edelmetallelektrode mit Anschlüssen,

d) einer Öffnung hohen Strömungswiderstands in einer
Kammerwand zur gasleitenden Verbindung des Hohlraums mit einer eine zu bestimmende Sauerstoffkomponente enthaltenden Gasatmosphäre,

g e k e n n z e i c h n e t   d u r c h

e) ein flaches Keramiksubstrat (8) als Grundplatte,

f) auf diesem mit Hilfe von die Werkstoffe in fein verteilter Form aufbringenden Verfahren hergestellte
übereinanderliegende Schichten, nämlich

g) eine zusammen mit einer Teilfläche des Substrats (8)
einen Hohlraum nach a) umschließende erste Edelmetallschicht (11) als Innenelektrode,

h) eine Sauerstoffionen leitende Festelektrolytschicht
(11),

i) eine zweite Edelmetallschicht (13) als Außenelektrode.

2. Sauerstoffsensor nach Anspruch 1,   d a d u r c h
g e k e n n z e i c h n e t ,   daß die Dicke der Edelmetallschichten (11 und 13) für die Elektroden in der
Größenordnung von 1 $\mu$ und die der Festelektrolytschicht
(12) in der Größenordnung von 100 $\mu$ liegt.

3. Sauerstoffsensor nach Anspruch 1,   d a d u r c h
g e k e n n z e i c h n e t ,   daß die Edelmetallschichten (11 und 13) für die Elektroden aus Platin und die
Festelektrolytschicht (12) aus stabilisiertem Zirkonoxyd
bestehen.

0104636

- 6 -     VPA 82 P 8574 E

4. Sauerstoffsensor nach Anspruch 1, d a d u r c h
g e k e n n z e i c h n e t , daß in dem Keramiksubstrat
(8) ein elektrisches Heizelement (19) angeordnet und mit
nach außen führenden Anschlüssen (18, 141, 142) versehen
ist.

5. Verfahren zur Herstellung von Sauerstoffsensoren nach
Anspruch 1 mit folgenden Verfahrensschritten:
a) auf ein Keramiksubstrat (8) wird eine Schicht (10) aus
   einem verbrennbaren Feststoff aufgebracht, deren geometrische Form der des Hohlraums nach 1 a) entspricht,
b) auf die Feststoffschicht (10) und Teile des sie umgebenden Substrats wird eine erste Edelmetallschicht (11)
   aufgebracht,
c) auf die erste Edelmetallschicht (11) wird eine diese
   allseits umschließende Schicht (12) eines Sauerstoffionen leitenden Festelektrolyten aufgebracht,
d) auf die Festelektrolytschicht (12) wird eine zweite
   Edelmetallschicht (13) aufgebracht,
e) das so entstandene Gebilde wird einer Temperatur ausgesetzt, bei der der verbrennbare Feststoff in die
   flüchtige Phase übergeht,
f) die flüchtigen Bestandteile des verbrennbaren Feststoffs werden durch eine Öffnung (16) in der Wand des
   so entstehenden Hohlraums (2) abgezogen.

6. Verfahren nach Anspruch 5, d a d u r c h   g e -
k e n n z e i c h n e t , daß der verbrennbare Feststoff Kohle ist.

7. Verfahren nach Anspruch 5, d a d u r c h   g e -
k e n n z e i c h n e t , daß die Schichten (11, 12, 13)
mittels Siebdruck, Aufdampfen, Zerstäuben (Sputtern),
Plasmasprühen oder ähnlicher Techniken aufgebracht werden.

8. Verfahren nach Anspruch 5 und 7, d a d u r c h
g e k e n n z e i c h n e t , daß der brennbare Fest-

stoff durch Siebdruck aufgebracht und unter Polymerisation des in der Druckpaste enthaltenen Binders getrocknet und gehärtet wird.

9. Verfahren nach Anspruch 5, d a d u r c h   g e -
k e n n z e i c h n e t ,   daß ein den Festelektrolyten bildendes Metalloxyd, vorzugsweise Zirkonoxyd, durch ein Plasma-Sprüh-Verfahren aufgebracht wird.

10. Verfahren nach Anspruch 5, d a d u r c h   g e -
k e n n z e i c h n e t ,   daß die die Elektroden bildenden Edelmetallschichten (11, 13) durch Zerstäuben (Sputtern) aufgebracht werden.

11. Verfahren nach Anspruch 5, d a d u r c h   g e -
k e n n z e i c h n e t ,   daß eine Vielzahl von Sauerstoffsensoren auf einem gemeinsamen, teilbaren Substrat gleichzeitig hergestellt wird.

0104636

1/1      82 P 8574

FIG 1

FIG 2

FIG 3